# EUROPEAN PATENT APPLICATION

(11) **EP 2 481 482 A1**
(43) Date of publication of application: **01.08.2012**
(21) Application number: 11152194.4
(22) Date of filing: 26.01.2011
(51) Int. Cl.: B03D 1/02, B03D 1/14

(54) **Control of a froth flotation process with a model based controller using the online measurement of the surface tension**

(71) Applicant: ABB Research Ltd., 8050 Zürich (CH)
(72) Inventor: Kramer, Axel, 5430 Wettingen (CH); Lobo, Julio Danin, 5400 Baden (CH); de Salles Leal Filho, Laurindo, 01410-000, São Paulo-SP (BR); Gaulocher, Sebastian, 4800 Zofingen (CH); Martins, Marisa, 05625-000, São Paulo-SP (BR)
(74) Representative: ABB Patent Attorneys

(57) **Abstract**

The present invention is concerned with model-based control of a froth flotation process for concentrating a desired target mineral from ground ore. It exploits real time information about a surface tension of a pulp or flotation solution comprising the minerals. The surface tension represents exemplary additional information about the surface chemistry in the flotation process, and as such enables a refinement of a pulp model used in control of the flotation process. Ultimately, operational efficiency of a froth flotation plant is increased.

## Description

### FIELD OF THE INVENTION

The invention relates to the field of minerals processing, and in particular to control of froth flotation processes for extracting a desired type of mineral from a pulp comprising ground ore, water and chemicals.

### BACKGROUND OF THE INVENTION

Froth flotation in mineral processing industry is widely used for extraction of a specific type of mineral from ground ore while depressing the amount of undesired minerals (gangue) in the concentrate. Froth flotation enables mining of low-grade and complex ore bodies that otherwise would be disregarded due to lack of profitability.

In a flotation cell ground ore is fed as an aqueous pulp into a vessel with an agitator or impeller. Air bubbles are blown through the pulp and rise to the liquid surface. By adding chemical agents (collectors) to the pulp the desired mineral is selectively rendered more hydrophobic, thus increasing separability of hydrophobic and hydrophilic particles. The hydrophobic mineral particles in the pulp preferably attach to small air bubbles which lift the particles to the liquid surface. At the surface, a froth layer builds up, which is then skimmed to harvest the concentrate, while the wetted gangue material remains in the liquid pulp phase, eventually leaving the cell through a tailings outlet at the bottom. Several flotation cells can be interconnected with other elements (e.g. cyclones, mills, mixing tanks) in order to yield a flotation circuit suitable for the extraction of a particular mineral type (e.g. sphalerite, a zinc mineral). Finally, different flotation circuits together with a crusher, grinding circuit, thickener, and dryer may be combined in order to form a concentrator used for extracting several mineral types from the same ore.

An important element in flotation circuit control includes accurate knowledge about the quantitative composition of the feed material and of the material at different locations in the circuit. A corresponding process parameter in this respect is the mass content of the specific minerals and the overall solid fraction, which can be monitored using an X-ray analyzer. Furthermore, air flow rate, froth level and froth thickness are typically measured in each cell, while the pulp flow rate is measured in specific locations in the circuit. The sensor signals are typically used as input to control and optimize a flotation circuit.

A control strategy for a flotation circuit based on model predictive control using mixed-logical dynamical systems and tested in a zinc flotation circuit is described in a paper by S. Gaulocher, E. Gallestey, and H. Lindvall, entitled "Advanced process control of a froth flotation circuit", V International Mineral Processing Seminar, October 22-24, (2008), Santiago, Chile. The authors' objective was to maximize the production value or yield by making optimal use of the available circuit instrumentation, i.e. actuators, sensors and low-level control loops.

Model Predictive Control requires three to four main ingredients: a dynamic model of the process, measurements or estimates of the internal state variables (such as pulp phase composition in each cell of the circuit), an objective function to be optimized, and possibly constraints. Typically, control performance increases with the accuracy of the process model. However, this comes at the cost of higher instrumentation requirements because process model complexity and type, number, and positioning of the sensors must match.

In the above paper, a first-principles model based on physical insight was used. As only limited knowledge -the pH - about the pulp phase of the cell was available, the pulp model was restricted to volume and mass conservation, and assumed perfect mixing.

In general, for controlling a froth flotation plant only limited in-situ measurement information about the surface chemistry of the solid/liquid mixture is available. The lack of knowledge about the surface chemistry precludes operation and control of the plant at its optimum efficiency. This in turn reduces the lifetime and profitability of the plant and represents a waste of natural resources.

The efficiency of a flotation process with long-chain collectors is very much dependent on the surface tension of the flotation solution, as reported by M. Martins, L.S. Filho and B.K. Parekh "Surface tension of flotation solution and its influence on the selectivity of the separation between apatite and gangue minerals", Minerals and Metallurgical Processing Vol.26, No.2, p.79, (2009). In the experiments reported, the surface tension is determined by occasional retrieval of samples from a flotation solution and subsequent analysis of the samples by means of laboratory instruments, entailing a considerable time-delay between the generation of a sample and the availability of the corresponding surface tension value.

### DESCRIPTION OF THE INVENTION

It is therefore an objective of the invention to increase an operational efficiency of a froth flotation plant, and to improve a controllability of a froth flotation process in minerals industry. This objective is achieved by a system and method for controlling a froth flotation process according to the independent claims. Preferred embodiments are evident from the dependent patent claims, wherein the claim dependency shall not be construed as excluding further meaningful claim combinations.

According to the invention, control of a froth flotation process for concentrating a desired target mineral from ground ore exploits real-time or online information about a surface tension of a pulp or slurry comprising the minerals. The surface tension represents exemplary additional information about the surface chemistry in the flotation process, and as such enables a refinement of a pulp model used to control the flotation process. Measuring the surface tension continually or repeatedly (e.g. every few minutes) and in-situ either directly in the flotation cell or in a by-pass of the flotation cell produces valuable real-time measurement samples as a basis for future process control actions. Hence, a basic idea of the invention includes a continuous monitoring of a surface tension, or of any related parameter, of the pulp in view of improved process efficiency. In conjunction with various other sensor signals, control actions or set-points for the manipulated variables such as air flow rate, froth layer level and thickness, and addition of chemicals are determined.

The controlled froth flotation process is part of a flotation circuit with at least one flotation cell comprising a sensor for measuring a surface tension at a specific location in the pulp contained in the cell. Accordingly, a control model of the flotation circuit includes a model of the flotation cell, which in turn includes a model of the pulp phase taking into account the surface tension of the pulp as measured by the sensor.

In preferred variants of the invention, a temperature sensor for measuring the temperature of the pulp is provided. Since the surface tension is temperature dependent (typically for aqueous solutions 0.14 (mN/m)/K), adding a temperature sensor to the sensor system allows compensating for thermal variations in the surface tension signal. Furthermore, a viscosity sensor and/or a pressure sensor may be added, with their respective measurements likewise being employed for compensating the surface tension signal. In this context, a combined sensor system may integrate into a single device various sensors for measuring parameters relevant to surface chemistry, such as dynamic surface tension, temperature, viscosity, pressure, pH, etc.

In an advantageous embodiment of the invention, further sensors of either one of the aforementioned kinds may be provided at further locations in the flotation cell, and used to compensate for inhomogeneous pulp properties. In particular, a second surface tension sensor is provided at a height in the flotation cell that is different from a height of a first surface tension sensor. Measurement of the surface tension at two or more locations of different height can be used for compensation of pressure variation due to fluctuating filling levels in the flotation cell.

Surface tensiometers are available from various sources, wherein experience on an industrial scale has been gained for applications like cleaning baths for the automotive industry or de-inking processes in paper industry. A suitable surface tension sensor is a differential bubble tensiometer with two nozzles of different diameter producing bubbles in the fluid at a certain rate, as disclosed in US 6085577. In such a configuration, fluctuating fluid levels and the corresponding influence of hydrostatic pressure are compensated for automatically. At the same time, viscosity effects can be compensated for by suitably adjusting the bubble rate.

Generally, flotation cells are arranged in flotation circuits with an individual cell being fluidly connected to up to three other cells (feed, concentrate, tailings). In such a configuration, the surface tension measured in a first flotation cell may also be exploited to control a flotation process in a further or second cell, e.g. by suitable interpolation or extrapolation, thus saving corresponding investments.

### BRIEF DESCRIPTION OF THE DRAWINGS

The subject matter of the invention will be explained in more detail in the following text with reference to preferred exemplary embodiments which are illustrated in the attached drawings, which schematically show:
Fig. 1 a froth flotation cell with a control system; and
Fig.2 a froth flotation cell with a sensor system inserted in bypass configuration.

### DETAILED DESCRIPTION OF PREFERRED EMBODIMENTS

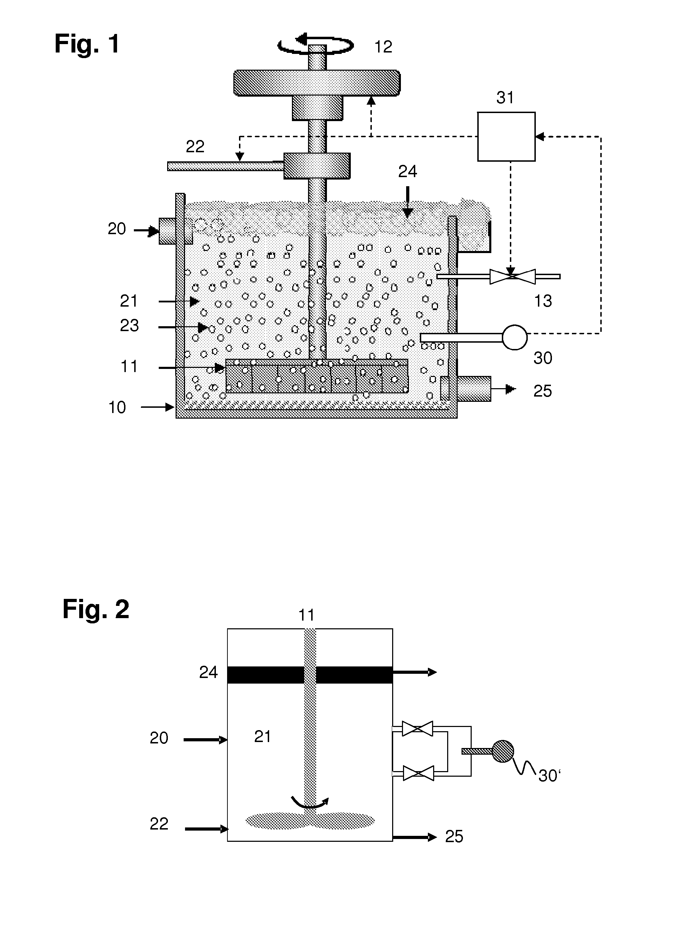

Fig.1 schematically depicts a froth flotation cell with a vessel or mixing tank 10 and an agitator or stirrer 11 driven by a motor 12. An aqueous pulp comprising ground ore is fed, via in-feed 20, to slurry 21. Suitable chemicals (collectors, frothers, modifiers, pH-regulators) are added to the slurry via dosage valve 13. Air is injected, through air-supply 22, into the slurry 21, and forming bubbles 23 rising to the surface of the slurry. At the surface, a froth layer 24 develops, while tailings are removed from the vessel at outlet 25. A controller 31 receives sensor signals from sensor 30 and controls the motor 12, air-supply 22, and dosage valve 13 in response.

The material separation in the froth flotation cell is based on a physico-chemical process which in turn depends on a wettability of the mineral surface. Accordingly, surface active chemicals are used to control wetting of specific materials. Rising bubbles collect chemically modified hydrophobic particles and form a froth layer at the surface. The concentrated material in the froth is recovered by skimming.

Further sensors and measurement systems which are not depicted in Fig.1 include volume flow sensor and X-ray analyzer for analysis of the pulp at different locations in the flotation circuit, as well as meters for determining one or two of a pulp level, froth layer level and froth thickness. Likewise, machine vision systems can be applied to determine froth color, froth bubble size distribution or pulp bubble size distribution. In addition to agitator speed, air flow rate, and addition rate of various chemicals, pulp feed rate through the in-feed and tailings release rate through the outlet represent control parameters, which are regulated by their respective set-points, actuators (valves) and feedback loops. Set-points for low-level closed control loops such as pH, fluid level or froth layer thickness may likewise be determined by the controller. In particular, the controller may also determine a target value or set-point for the surface tension in a certain flotation cell, which is then subject to low-level feedback control via controlled addition of surface-tension-adjusting chemicals.

Sensor 30 continually measures surface tension of the aqueous pulp, as well as temperature and, optionally, also viscosity, density and hydrostatic pressure. Hence, sensor 30 is an industry-grade process tensiometer providing continuous, on-line information of surface tension of the pulp.

Fig.2 shows a flotation cell with a sensor system inserted in bypass configuration, where the pulp is brought through some process pipes and valves to the location of the tensiometer 30'. The flow at the sensor 30' can be controlled to prevent turbulences, and may even be temporarily interrupted in order to generate a calm measurement environment.

Since the mixing of the slurry in the flotation cell will neither result in a perfectly homogeneous distribution of particles, water and surfactants nor in a uniform distribution of temperature or other process parameters, such as surface tension or viscosity, a plurality of sensors may be provided at different locations. These sensors provide spatially further resolved information about the flotation process which can be exploited by a correspondingly refined process model. On the other hand, a plurality of sensors allows for averaging the corresponding signals, and thus enables a more efficient feedback control of the process.

## Claims

1. A system for controlling a froth flotation process in a flotation circuit, comprising a sensor (30) for measuring continually a surface tension of a pulp contained in a flotation cell (10) of the flotation circuit, and a controller (31) for controlling the flotation process based on a model of the flotation circuit taking into account the surface tension of the pulp measured by the sensor (30).

2. The system according to claim 1, further comprising a temperature sensor for measuring a temperature variation of the pulp, wherein the system is adapted to compensate the measured surface tension for the measured temperature variation.

3. The system according to claim 2, comprising a viscosity sensor for measuring a viscosity variation of the pulp, wherein the system is adapted to compensate the measured surface tension for the measured viscosity variation.

4. The system according to claim 2 or 3, comprising a pressure sensor for measuring a pressure variation of the pulp at the location of the sensor, wherein the system is adapted to compensate the measured surface tension for the measured pressure variation.

5. The system according to claim 2 or 3, wherein the sensor (30) is arranged at a first height in the flotation cell, comprising a further surface tension sensor for measuring a surface tension of the pulp at a second height in the flotation cell different from the first height, the model of the flotation circuit taking into account a difference between surface tension values measured at the first and second height.

6. The system according to claim 2, comprising a differential bubble tensiometer as the sensor (30).

7. The system according to claim 1, **characterized in that** the controller (31) is adapted to control a froth flotation process in a flotation circuit comprising a further flotation cell fluidly connected to an in-feed (20) or outlet (25) of the flotation cell (10) and based on the surface tension of the pulp measured by the sensor (30) in the flotation cell (10).

8. A method of controlling a froth flotation process in a flotation circuit, comprising
- measuring continually a surface tension of a pulp contained in a flotation cell (10) of the flotation circuit, and
- controlling the flotation process based on a model of the flotation circuit taking into account the measured surface tension of the pulp.

9. The method according to claim 8, comprising
- measuring a temperature variation of the pulp, and
- compensating the measured surface tension for the measured temperature variation.

10. The method according to claim 8 or 9, comprising
- measuring the surface tension with a differential bubble tensiometer.
